# EUROPÄISCHE PATENTSCHRIFT

(11) **EP 4 025 480 B1**
(45) Veröffentlichungstag und Bekanntmachung des Hinweises auf die Patenterteilung: **14.05.2025**
(21) Anmeldenummer: 20768326.9
(22) Anmeldetag: 04.09.2020
(51) Int. Cl.: B62J 13/02, B62M 9/00, F16H 7/18, B62K 25/30

(54) **KETTENABSCHIRMUNG FÜR EIN FAHRRAD**
CHAIN COVER FOR A BICYCLE
GARDE-CHAÎNE POUR VÉLO

(30) Priorität: 04.09.2019 DE 102019123724
(43) Veröffentlichungstag der Anmeldung: 13.07.2022
(73) Patentinhaber: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB
(86) Internationale Anmeldenummer: PCT/EP2020/074877
(87) Internationale Veröffentlichungsnummer: WO 2021/044038

(56) Entgegenhaltungen:
- DE-A1- 102012 205 182
- JP-A- H0 899 663
- JP-Y1- S4 521 863
- US-A- 582 096

## Beschreibung

### Technisches Gebiet

Die Erfindung bezieht sich auf ein Fahrradanbauteil zum Abschirmen von einem Zugmitteltrieb eines Fahrradantriebs. Die Erfindung bezieht sich auch auf einen Fahrradhinterbau und ein Fahrrad mit einem derartigen Fahrradanbauteil.

### Stand der Technik

Es ist bekannt, einen Kettenschutz, beispielsweise eine Kettenschutzscheibe, an einer Kettenradgarnitur eines Fahrrads zu befestigen, um zu verhindern, dass eine Hose eines Fahrradfahrer mit einem Kettenblatt der Kettenradgarnitur in Berührung kommt. Das Dokument JPH0899663A offenbart einen gattungsgemäßen Farradanbauteil.

### Darstellung der Erfindung

Die Erfindung betrifft in einem Aspekt ein Fahrradanbauteil zum Abschirmen von einem zwischen zwei Zahnrädern eines Fahrradantriebs freiliegenden Abschnitt eines Zugmitteltriebs des Fahrradantriebs.

Der Zugmitteltrieb kann eine Fahrradkette sein. Handelt es sich bei dem Zugmitteltrieb um eine Fahrradkette, können die zwei Zahnräder ein Kettenblatt und ein Ritzel des Fahrradantriebs sein. Bei dem Kettenblatt kann es sich um ein mit einer Kurbel und einem Kurbelstern verbundenes vorderes Zahnrad des Fahrradantriebs handeln. Bei dem Ritzel kann es sich um ein mit einer Nabe eines Hinterrads verbundenes hinteres Zahnrad des Fahrradantriebs handeln.

Alternativ zur Fahrradkette kann der Zugmitteltrieb ein Zahnriemen sein. Auch dann kann es sich bei einem der beiden Zahnräder um ein mit der Kurbel und dem Kurbelstern verbundenes vorderes Zahnrad und bei dem anderen der beiden Zahnräder um ein mit der Nabe des Hinterrads verbundenes hinteres Zahnrad handeln. Bei dem Fahrradanbauteil kann es sich somit um ein Zugmitteltriebschutz, insbesondere um einen Kettenschutz, handeln.

Der freiliegende Abschnitt des Zugmitteltriebs kann einen Abschnitt des Zugmitteltriebs aufweisen, welcher nicht mit Zähnen von einem der Zahnräder kämmt. Der freiliegende Abschnitt des Zugmitteltriebs kann auch aus einem derartigen Abschnitt gebildet sein. Der freiliegende Abschnitt des Zugmitteltriebs kann räumlich zwischen den zwei Zahnrädern angeordnet sein.

Das Abschirmen des freiliegenden Abschnitts des Zugmitteltriebs kann ein zumindest bereichsweises Verdecken, Abdecken, Umgeben und/oder Einhausen des freiliegenden Abschnitts des Zugmitteltriebs aufweisen. Das Abschirmen kann auch in einem Fahrbetrieb des Fahrradanbauteils, das heißt in angebautem Zustand an einem Fahrrad und während einer Fahrt mit dem Fahrrad, temporär ein Führen des freiliegenden Abschnitts des Zugmitteltriebs aufweisen, wenn dieser an das Fahrradanbauteil stößt und dieses temporär berührt. Das Abschirmen weist in dem Fahrbetrieb jedoch kein dauerhaftes Führen des freiliegenden Abschnitts des Zugmitteltriebs auf. Vielmehr soll das Fahrradanbauteil eine dauerhafte Zugmitteltriebführung, insbesondere eine Kettenführung, ersetzten können und dabei trotzdem als Abspringschutz zum Schützen des Zugmitteltriebs vor einem Abspringen von einem der beiden Zahnräder schützen, ohne dass eine dauerhafte mechanische Führung des Zugmitteltriebs durch das Fahrradanbauteil vorgesehen sein muss.

Das Fahrradanbauteil ist zum Befestigen an einer antriebsseitigen Strebe, insbesondere einer Kettenstrebe, eines Fahrradhinterbaus ausgebildet. Bei der antriebsseitigen Strebe kann es sich um die bezogen auf den Fahrbetrieb des Fahrrads rechte oder linke Strebe handeln, welche das Tretlager mit der Nabe des Hinterrads auf der Seite des Fahrradantriebs verbindet. Die antriebsseitige Strebe kann an dem Fahrradrahmen gefedert angelenkt sein. Die antriebsseitige Strebe kann somit als Schwinge ausgebildet sein beziehungsweise eine Schwinge aufweisen. In einem Befestigungszustand des Fahrradanbauteils ist das Fahrradanbauteil an der antriebsseitigen Strebe befestigt. Das Fahrradanbauteil kann dabei mit der antriebsseitigen Strebe fest verbunden sein, beispielsweise mit dieser verschraubt sein, wobei das Fahrradanbauteil zumindest bereichsweise bündig zur antriebsseitigen Strebe an dieser angeordnet sein kann. Das Fahrradanbauteil kann auch an der antriebsseitigen Strebe angesteckt oder in dieser eingerastet sein, wobei das Fahrradanbauteil in die antriebsseitige Strebe eingreifen kann.

Das Fahrradanbauteil umgibt den freiliegenden Abschnitt des Zugmitteltriebs in dem Befestigungszustand an der antriebsseitigen Strebe mindestens dreiseitig. Das Fahrradanbauteil kann den freiliegenden Abschnitt des Zugmitteltriebs in dem Befestigungszustand so mindestens dreiseitig verdecken, abdecken, umgeben und/oder einhausen. Das Fahrradanbauteil kann somit drei Bauteilseiten beziehungsweise Bauteilwände aufweisen, welche paarweise zueinander abgewinkelt sein können. Das Fahrradanbauteil kann daher in einem Bauteilprofil quer zu einer Längsausdehnung des Fahrradanbauteils ein U-Profil aufweisen. Bei dem Fahrradanbauteil kann es sich daher um einen Zugmitteltriebtunnel, insbesondere um einen Kettentunnel, handeln, welcher den freiliegenden Abschnitt des Zugmitteltriebs dreiwandig umfasst.

Im Zusammenhang mit der Erfindung wird ein Fahrradanbauteil zum Anbauen an einem Fahrrad bereitgestellt, welches einen Zugmitteltrieb eines Fahrradantriebs dreiflächig und beabstandet umgeben kann. Ein freiliegender Abschnitt des Zugmitteltriebs kann so mit dem Fahrradanbauteil vor Umgebungseinflüssen abgeschirmt beziehungsweise geschützt werden. Das Fahrradanbauteil kann so beispielsweise vor einer Verschmutzung im Fahrbetrieb geschützt und als Spritzschutz fungieren. Zudem kann ein Abspringen des Zugmitteltriebs von den Zahnrädern mit dem Fahrradanbauteil erschwert werden und Schäden und Verletzungen durch ein Berühren des Zugmitteltriebs durch einen Fahrradfahrer im Fahrbetrieb vermieden werden. Das Fahrradanbauteil kann somit auch als Abspringschutz beziehungsweise als Fahrschutz fungieren. Das Fahrradanbauteil kann somit in vorteilhafter Weise ein Doppelfunktionalität als Reifenspritzschutz und als Kettenabspringschutz bereithalten.

Gemäß einer Ausführungsform des Fahrradanbauteils ist das Fahrradanbauteil zum ausschließlichen Befestigen an der antriebsseitigen Strebe des Fahrradhinterbaus ausgebildet. Das Fahrradanbauteil kann nur an der antriebseitigen Strebe befestigt sein beziehungsweise dazu ausgebildet sein. Das Fahrradanbauteil ist so nicht am Fahrradrahmen und nicht an einer weiteren Strebe des Fahrradhinterbaus befestigt. Ist die antriebseitige Strebe an dem Fahrradrahmen federnd angelenkt, kann das Fahrradanbauteil so bei einem Einfedern oder Ausfedern der antriebsseitigen Strebe eine zum Fahrrahmen relative Bewegung des antriebseitigen Strebe mitausführen. Das Fahrradanbauteil kann sich so beim Einfedern oder Ausfedern der antriebsseitigen Strebe relativ zu einem an dem Fahrradrahmen drehbar gelagerten Kettenblatt bewegen und zu diesem beim Einfedern oder Ausfedern eine Nickbewegungen zusammen mit der antriebsseitigen Strebe ausführen. Das Fahrradanbauteil kann somit als ein starres Fahrradanbauteil ausgebildet sein. Das Fahrradanbauteil selbst kann daher in vorteilhafterweise wartungsarm sein, da das Fahrradanbauteil selbst ohne zu wartenden Gelenke ausgebildet sein kann.

Erfindungsgemäß weist das Fahrradanbauteil einen innenliegenden Bauteilbereich zum Abschirmen des freiliegenden Abschnitts des Zugmitteltriebs von einem an dem Fahrradhinterbau angeordneten Hinterradreifen auf. Bei dem innenliegenden Bauteilbereich kann es sich um einen im Befestigungszustand des Fahrradanbauteils dem Hinterradreifen beziehungsweise der Mittenebene des Fahrrads zugewandten Bauteilbereich beziehungsweise einem dazu benachbarten Bauteilbereich handeln. In diesem Zustand kann der innenliegende Bauteilbereich bereichsweise zwischen einem Bereich des Hinterradreifens und dem freiliegenden Abschnitt des Zugmitteltriebs angeordnet sein. Der innenliegende Bauteilbereich kann sich in diesem Zustand vertikal erstrecken. Der innenliegende Bereich kann den Zugmitteltrieb somit in vorteilhafter Weise vor einer Schmutzeinwirkung durch von dem Hinterradreifen abgeworfenen Schmutz im Fahrbetrieb des Fahrradanbauteils abschirmen.

Erfindungsgemäß weist das Fahrradanbauteil einen obenliegenden Bauteilbereich zum weiteren Abschirmen des freiliegenden Abschnitts des Zugmitteltriebs auf.

Der obenliegende Bauteilbereich kann sich in dem Befestigungszustand des Fahrradanbauteils horizontal erstrecken. Der obenliegende Bauteilbereich kann sich in diesem Zustand vom innenliegenden Bauteilbereich nach außen beziehungsweise von der Mittenebene des Fahrrads weg erstrecken. Der innenliegende Bauteilbereich und der obenliegende Bauteilbereich können einen Winkel, beispielsweise einen spitzen Winkel, das heißt einen Winkel kleiner als 90 Grad, oder einen rechten Winkel, ausbilden beziehungsweise einschließen. Zwischen dem innenliegenden Bauteilbereich und dem obenliegenden Bauteilbereich kann daher eine Kante ausgebildet sein, welche abgerundet beziehungsweise abgeflacht sein kann. Der obenliegende Bereich kann den Zugmitteltrieb somit in vorteilhafter Weise zusätzlich zur seitlichen Schmutzeinwirkung auch vor einer Fremdeinwirkung von oben, beispielweise einer Berührung durch einen Fahrradfahrer, abschirmen.

Erfindungsgemäß weist das Fahrradanbauteil einen außenliegenden Bauteilbereich zum weiteren Abschirmen des freiliegenden Abschnitts des Zugmitteltriebs auf.

Bei dem außenliegenden Bauteilbereich kann es sich um einen im Befestigungszustand des Fahrradanbauteils vom Hinterradreifen beziehungsweise der Mittenebene des Fahrrads abgewandten Bauteilbereich handeln. Der außenliegenden Bauteilbereich kann so in diesem Zustand vom Hinterradreifen weiter entfernt sein als der innenliegende Bauteilbereich, wobei die beiden Bereiche voneinander beabstandet sind. In diesem Zustand kann der außenliegende Bauteilbereich bereichsweise zwischen einer sich vorbeibewegenden Kurbel und einem sich vorbeibewegenden Pedal des Fahrradantriebs und dem Zugmitteltrieb angeordnet sein. Der außenliegende Bauteilbereich kann sich in diesem Zustand vertikal erstrecken, wobei sich der außenliegende Bauteilbereich V-förmig und/oder schräg zum innenliegenden Bauteilbereich erstrecken kann. Ein Abstand zwischen dem innenliegenden Bauteilbereich und dem außenliegenden Bauteilbereich kann sich so nach unten verkleinern und der vom Fahrradbauteil eingeschlossene Raum verkleinern. Der außenliegende Bauteilbereich kann sich in diesem Zustand vom obenliegenden Bauteilbereich nach unten erstrecken. Der außenliegende Bauteilbereich und der obenliegende Bauteilbereich können einen Winkel, beispielsweise einen spitzen Winkel, das heißt einen Winkel kleiner als 90 Grad, oder einen rechten Winkel, ausbilden beziehungsweise einschließen. Zwischen dem außenliegenden Bauteilbereich und dem obenliegenden kann daher eine Kante ausgebildet sein, welche abgerundet beziehungsweise abgeflacht sein kann. Der außenliegende Bauteilbereich kann den Zugmitteltrieb somit in vorteilhafter Weise vor einer Fremdeinwirkung durch Schuhe oder Kleidung eines Fahrradfahrers im Fahrbetrieb des Fahrradanbauteils abschirmen.

Das Fahrradanbauteil kann ein mindestens zweifach abgewinkeltes beziehungsweise gebogenes Bauteil sein, wobei das Fahrradanbauteil zwei obenliegende Kanten aufweisen kann. Von dem obenliegenden Bauteilbereich können sich der außenliegende Bauteilbereich und der innenliegende Bauteilbereich gemeinsam trichterförmig nach unten erstrecken.

Gemäß einer weiteren Ausführungsform des Fahrradanbauteils weist das Fahrradanbauteil einen untenliegenden Befestigungsbereich zum Befestigen des Fahrradanbauteils an der antriebsseitigen Strebe auf. Der untenliegende Befestigungsbereich des Fahrradanbauteils kann sich in dem Befestigungszustand des Fahrradanbauteils horizontal auf der antriebsseitigen Strebe erstrecken. Der untenliegende Befestigungsbereich kann sich in diesem Zustand vom innenliegenden Bauteilbereich nach außen beziehungsweise von der Mittenebene des Fahrrads weg erstrecken. Alternativ oder zusätzlich kann sich der untenliegende Befestigungsbereich in diesem Zustand vom außenliegenden Bauteilbereich nach innen beziehungsweise zu der Mittenebene des Fahrrads hin erstrecken. Der innenliegende Bauteilbereich und/oder der außenliegende Bauteilbereich können mit dem untenliegenden Befestigungsbereich jeweils einen Winkel, beispielsweise einen stumpfen Winkel, das heißt einen Winkel größer als 90 Grad, oder einen rechten Winkel, ausbilden beziehungsweise einschließen. Zwischen dem innenliegenden Bauteilbereich und/oder dem außenliegenden Bauteilbereich und dem untenliegende Befestigungsbereich kann daher jeweils eine Kante ausgebildet sein, welche abgerundet beziehungsweise abgeflacht sein kann. Der untenliegende Befestigungsbereich kann ferner die antriebsseitige Strebe vor dem Zugmitteltrieb bei einem Ausschlagen des Zugmitteltriebs nach unten abschirmen und somit vor Schlägen des Zugmitteltriebs schützen.

Das Fahrradanbauteil kann daher auch ein mindestens dreifach oder vierfach abgewinkeltes beziehungsweise gebogenes Bauteil sein, wobei das Fahrradanbauteil zwei obenliegende Kanten und mindestens eine untenliegende Kante aufweisen kann. Der untenliegende Befestigungsbereich kann mit innenliegenden Bauteilbereich und mit dem außenliegenden Bauteilbereich verbunden sein, wobei der Befestigungsbereich dann nicht geschlossen ist und zwei voneinander getrennte Teilbereiche aufweist. Das Fahrradanbauteil kann ein offenes Querprofil aufweisen.

Gemäß dieser Ausführungsform kann der untenliegende Befestigungsbereich eine Befestigungsausnehmung für ein Befestigungsmittel aufweist. In dem Befestigungszustand kann das Fahrradanbauteil so mit der antriebsseitigen Strebe mit einer Schraube als Befestigungsmittel verschraubt sein.

Gemäß einer weiteren Ausführungsform des Fahrradanbauteils ist das Fahrradanbauteil einstückig ausgebildet ist. Das Fahrradanbauteil kann so ein gebogenes Blech aufweisen, wobei das Fahrradanbauteil aus Metall, beispielsweise aus Aluminium, hergestellt sein kann. Alternativ dazu kann das Fahrradanbauteil ein Spritzgussteil aufweisen, wobei das Fahrradanbauteil aus einem Kunststoff hergestellt sein kann. In einer weiteren Alternative ist das Fahrradanbauteil aus Carbon hergestellt. Das Fahrradanbauteil kann so in vorteilhafter Weise effizient und einteilig gefertigt werden.

Gemäß einer weiteren Ausführungsform des Fahrradanbauteils ist der innenliegende Bauteilbereich plattenförmig und als geschlossene Fläche ausgebildet ist. Die geschlossene Fläche kann für von dem Hinterradreifen abgeworfenen Schmutz, beispielsweise Bodenmaterial oder Schmutzwasser, undurchlässig sein. Die geschlossene Fläche kann daher ausnehmungslos sein oder Ausnehmungen aufweisen, durch welche ein derartiger Schmutz nicht durchdringen kann. Die geschlossene Fläche kann somit schmutzundurchlässig und/oder wasserundurchlässig sein. Eine entsprechende Verschmutzung des Zugmitteltriebs kann so mit dem Fahrradanbauteil reduziert werden. Durch eine reduzierte Verschmutzung kann auch der Verschleiß des Zugmitteltriebs, insbesondere einer Fahrradkette, reduziert werden und die Lebensdauer des Zugmitteltriebs erhöht werden. Auch ein erhöhter Laufwiderstand durch einen verschmutzten Zugmitteltrieb kann so im Fahrbetrieb in vorteilhafter Weise vermieden werden.

Gemäß einer weiteren Ausführungsform des Fahrradanbauteils ist der außenliegende Bauteilbereich plattenförmig ausgebildet und weist eine Sichtausnehmung auf. Durch die Sichtausnehmung kann der von dem Fahrradanbauteil umgebene Zugmitteltrieb von außen auch im Bereich des außenliegenden Bauteilbereichs auf dessen Zustand geprüft werden. Die Sichtausnehmung kann die polygonale Form eines Vielecks, beispielweise eine Dreiecks, aufweisen. Somit ist der freiliegende Abschnitt des Zugmitteltrieb auch im Bereich des Fahrradanbauteils von außen sichtbar. Ein weiterer vorteilhafter Effekt der Sichtausnehmung besteht in einer Gewichtsreduzierung bei dem Fahrradanbauteil.

Gemäß einer weiteren Ausführungsform des Fahrradanbauteils weist der außenliegende Bauteilbereich einen konkaven Außenkonturabschnitt zum Bereitstellen von einem Freiraum für einen sich bewegenden Kurbelarm des Fahrradantriebs auf. Der Außenkonturabschnitt kann mindestens einen gekrümmten Abschnitt aufweisen. Zusätzlich dazu kann der Außenkonturabschnitt mindestens einen geraden Abschnitt aufweisen. Somit kann sich das Fahrradanbauteil in dem Befestigungszustand an der antriebsseitigen Strebe auch oberhalb von einem vorderen Zahnrad des Fahrradantriebs, insbesondere einem Kettenblatt, erstrecken, ohne an dieser Fahrradkomponente befestigt zu sein. Das Fahrradanbauteil kann somit zusätzlich zum Abschirmen eines vorderen Zahnrads des Fahrradantriebs, insbesondere einem Kettenblatt, fungieren.

Gemäß einer weiteren Ausführungsform des Fahrradanbauteils weist der innenliegende Bauteilbereich einen konkaven Außenkonturabschnitt zum Bereitstellen von einem Freiraum für einen sich bewegenden Kurbelstern des Fahrradantriebs auf. Der Außenkonturabschnitt kann mindestens einen gekrümmten Abschnitt aufweisen. Zusätzlich kann der Außenkonturabschnitt mindestens einen geraden Abschnitt aufweisen. Somit kann sich das Fahrradanbauteil in dem Befestigungszustand an der antriebsseitigen Strebe auch oberhalb von einem Tretlagergehäuse des Fahrradrahmens erstrecken, ohne an dem Fahrradrahmen befestigt zu sein. Das Fahrradanbauteil kann so ausschließlich am Fahrradhinterbau befestigt sein. Das Fahrradanbauteil kann somit zusätzlich zum Abschirmen einer Kurbelgarnitur des Fahrradantriebs, insbesondere einem Kettenblatt, fungieren und die Kurbelgarnitur vor einer Schmutzeinwirkung im Fahrbetrieb abschirmen.

Gemäß einer weiteren Ausführungsform des Fahrradanbauteils sind der konkave Außenkonturabschnitt des außenliegenden Bauteilbereichs und der konkave Außenkonturabschnitt des innenliegenden Bauteilbereichs verschieden ausgeformt. Der außenliegende Bauteilbereich und der innenliegende Bauteilbereich können daher verschiedene Außenkonturen aufweisen. Die Außenkontur des außenliegenden Bauteilbereichs kann sich in dem Befestigungszustand weiter nach vorne zum vorderen Zahnrad erstrecken als die Außenkontur des innenliegenden Bauteilbereichs. Dadurch kann eine verbesserte Abschirmung des vorderen Zahnrads nach außen erreicht werden.

Erfindungsgemäß verjüngt sich der obenliegende Bauteilbereich zu einem vorderen Zahnrad der beiden Zahnräder, insbesondere einem Kettenblatt, des Fahrradantriebs zumindest abschnittsweise. Die sich von dem obenliegenden Bauteilbereich in dem Befestigungszustand nach unten erstreckenden Bereiche können so schräg zueinander angeordnet sein. Das Fahrradanbauteil kann sich so in diesem Zustand von hinten nach vorne trichterförmig erstrecken. In dem von dem Fahrradanbauteil eingeschlossenen Raum kann so ein Bewegungsspielraum für den Zugmitteltrieb bereitgestellt werden, welcher so auch auf einem von einer Vielzahl von verschiedenen hinteren Zahnrädern laufen kann.

Gemäß einer weiteren Ausführungsform des Fahrradanbauteils verjüngt sich der innenliegende Bauteilbereich und/oder der außenliegende Bauteilbereich zumindest abschnittsweise nach unten. Eine derartige Verjüngung kann durch einen der beschriebenen Freiräume beziehungsweise Außenkonturabschnitte ausgebildet werden. Der innenliegende Bauteilbereich und/oder der außenliegende Bauteilbereich kann auch keilförmig ausgebildet sein.

Gemäß einer weiteren Ausführungsform des Fahrradanbauteils weist das Fahrradanbauteil einen Abstandshalter zwischen dem innenliegenden Bauteilbereich und dem außenliegenden Bauteilbereich zum Aussteifen des Fahrradanbauteils auf. Der Abstandhalter kann an dem innenliegende Bauteilbereich angebracht sein. Der außenliegende Bauteilbereich kann auf dem Abstandshalter aufliegen, wobei eine durch den außenliegenden Bauteilbereich durchreifendes Haltemittel in den Abstandshalter eingreifen kann. So kann das Fahrradanbauteil zudem eine Schraube aufweisen, welche durch den außenliegenden Bauteilbereich durchgreift und mit dem Abstandshalter verschraubt sein kann. Der Abstandshalter kann hierfür ein Innengewinde aufweisen, in welches die Schraube eingeschraubt sein kann. Bei dem Abstandshalter kann es sich somit um einen Bolzen mit einem Innengewinde handeln. Mit dem Abstandshalter kann in vorteilhafter Weise verhindert werden, dass sich der außenliegende Bauteilbereich relativ zum innenliegenden Bauteilbereich während dem Fahrbetrieb bewegt. Ein weiterer vorteilhafter Effekt des Abstandshalters kann darin gesehen werden, dass dieser einen unteren Schlagschutz für den Zugmitteltrieb bereitstellt.

Gemäß einer weiteren Ausführungsform des Fahrradanbauteils greift der Abstandshalter in dem Befestigungszustand in die antriebsseitige Strebe ein. Der innenliegende Bauteilbereich kann hierfür einen Durchlass aufweisen, an welchem der Abstandshalter angeordnet sein kann und durch welchen das Haltemittel durchgreifen kann. Das Fahrradanbauteil kann so auch mit dem Haltemittel an der antriebsseitigen Strebe befestigt sein. Weist das Fahrradanbauteil den Befestigungsbereich auf, kann das Fahrradanbauteil zweifach an der antriebsseitigen Strebe befestigt sein. Beispielsweise ist das Fahrradanbauteil mit der antriebsseitigen Strebe zweifach verschraubt. Das Fahrradanbauteil kann so in stabiler Weise an der antriebsseitigen Strebe montiert sein.

Gemäß einer weiteren Ausführungsform des Fahrradanbauteils ist an dem Fahrradanbauteil eine dem Zugmitteltrieb zugewandte Einlage zum Bereitstellen einer Gleitfläche für den Zugmitteltrieb angeordnet. Die Einlage kann an jedem der beschriebenen Bereiche und Flächen angeordnet sein. Die Einlage kann beispielsweise aus Kunststoff gefertigt sein. Die Einlage kann eine geringere Gleitreibungszahl als das Material der beschriebenen Bereiche aufweisen und somit im Falle einer temporären Berührung beziehungsweise einer temporären Führung des Zugmitteltriebs eine Gleitfläche für den Zugmitteltrieb bereitstellen. Ferner kann die Einlage zum Bereitstellen eines Schlagschutzes für den Zugmitteltrieb an dem Fahrradanbauteil angeordnet sein. Hierfür kann die Einlage auch aus einem elastischen Material, beispielsweise Gummi, gefertigt sein.

Gemäß einer weiteren Ausführungsform des Fahrradanbauteils weist das Fahrradanbauteil einen zu einem vorderen Zahnrad der beiden Zahnräder, insbesondere einem Kettenblatt, auskragenden Abschnitt zum Bereitstellen eines Kettenabspringschutzes auf. Der auskragende Abschnitt kann durch den außenliegenden Bauteilbereich beziehungsweise durch dessen Außenkontur ausgeformt sein. Der auskragende Abschnitt kann sich in dem Befestigungszustand bis zu oder über einen Scheitelpunkt des Kettenblatts erstrecken.

Gemäß einer weiteren Ausführungsform des Fahrradanbauteils weist das Fahrradanbauteil einen Außenkonturbereich auf, welcher einer Kontur der antriebsseitigen Strebe in dem Befestigungszustand abschnittsweise, insbesondere flächig, folgt. Das Fahrradanbauteil kann so bündig an der antriebsseitigen Strebe befestigt sein. Der Befestigungsbereich und/oder der innenliegende Bauteilbereich können eine jeweiligen Passbereich aufweisen, welcher mit einem Anbaubereich zum Anbauen des Fahrradanbauteils auf der antriebsseitigen Strebe passgenau zusammenpasst. So kann auch eine Befestigungshilfe zum Befestigen des Fahrradanbauteils an der der antriebsseitigen Strebe und/oder an dem Fahrradanbauteil ausgebildet sein.

Die Erfindung betrifft in einem weiteren Aspekt einen Fahrradhinterbau welcher an einer antriebsseitigen Strebe einen Anbaubereich zum Befestigen des Fahrradanbauteils nach dem vorhergehenden Aspekt aufweist. Bei dem Anbaubereich kann es sich um einen Befestigungsbereich zum Befestigen des Fahrradanbauteils handeln. Das Fahrradanbauteil kann wie zum vorhergehenden Aspekt beziehungsweise gemäß dem darin beschriebenen Befestigungszustand an der antriebsseitigen Strebe befestigt werden. Der Anbaubereich des Fahrradhinterbaus kann mit einem geometrisch korrespondieren Bereichs des Fahrradanbauteils, insbesondere dem Befestigungsbereich desselben, einen Passsitz zum passgenauen Anbauen des Fahrradanbauteils ausbilden. Der Anbau des Fahrradanbauteils kann somit bereits bei einer Fertigung eines Fahrradhinterbaus berücksichtigt werden.

Die Erfindung betrifft in einem weiteren Aspekt ein Fahrrad mit einem an einem Fahrradrahmen gefedert angelenkten Fahrradhinterbau, welcher eine antriebsseitige Strebe, insbesondere eine Kettenstrebe, aufweist. Bei dem Fahrrad kann es sich um ein Mountainbike beziehungsweise um einen Fully handeln. Bei dem Fahrrad kann es sich um ein E-Bike handeln, wobei der Zugmitteltrieb elektrisch angetrieben werden kann.

An der der antriebsseitigen Strebe des Fahrrads ist ein Fahrradanbauteil nach dem entsprechenden vorhergehenden Aspekt befestigt. Das Fahrradanbauteil kann wie zu diesem Aspekt beziehungsweise gemäß dem darin beschriebenen Befestigungszustand an der antriebsseitigen Strebe befestigt sein. Das Fahrradanbauteil kann lösbar befestigt, beispielsweise mindestens einmal verschraubt, sein.

Das Fahrradanbauteil ist derart an der antriebsseitigen Strebe befestigt und dimensioniert, dass der freiliegende Abschnitt des Zugmitteltriebs in einem ausgefederten Zustand des Fahrradhinterbaus und in einem eingefederten Zustand des Fahrradhinterbaus von dem Fahrradanbauteil dreiseitig umgeben ist. Dies kann dadurch erzielt werden, dass das Fahrradanbauteil an der antriebsseitigen Strebe mitfedernd befestigt ist, das heißt das Fahrradanbauteil führt bei einem Einfedern und einem Ausfedern die Federbewegung des Fahrradhinterbaus beziehungsweise der antriebsseitigen Strebe mit aus.

Das Fahrradanbauteil kann in beiden Zuständen beabstandet zum freiliegenden Abschnitt des Zugmitteltriebs sein. Dabei kann zwischen dem obenliegenden Bauteilbereich des Fahrradbauteils und dem Zugmitteltrieb in beiden Zuständen ein Abstand vorhanden sein. Somit kann das Fahrradanbauteil den freiliegenden Abschnitt des Zugmitteltriebs in beiden Zuständen dreiseitig beziehungsweise tunnelartig umgeben.

### Kurze Beschreibung der Figuren

- Figur 1: zeigt ein Fahrradanbauteil gemäß einer Ausführungsform der Erfindung in einer seitlichen Ansicht von außen.
- Figur 2: zeigt das Fahrradanbauteil von Figur 1 in einer weiteren seitlichen Ansicht von innen.
- Figur 3: zeigt das Fahrradanbauteil von Figur 1 in einer perspektivischen Ansicht von schräg unten.
- Figur 4: zeigt das Fahrradanbauteil von Figur 1 in einer weiteren perspektivischen Ansicht von schräg oben.
- Figur 5: zeigt das Fahrradanbauteil in einem Befestigungszustand an einer antriebsseitigen Strebe eines gefederten Hinterbaus von einem Fahrrad, welcher sich in einem ausgefederten Zustand befindet.
- Figur 6: zeigt den Hinterbau von Figur 5 mit dem Fahrradanbauteil in einem eingefederten Zustand.

### Detaillierte Beschreibuna von Ausführungsformen

Die in der vorangehenden Darstellung und der nachfolgenden Beschreibung im Zusammenhang mit dem Fahrradanbauteil verwendete Begriffe "oben", "unten", "außen", "innen", "vorne" und "hinten" beziehen sich auf einen Befestigungszustand des Fahrradanbauteils an einer antriebsseitigen Strebe eines Hinterbaus eines Fahrrads beziehungsweise auf einen Fahrbetrieb des Fahrrads.

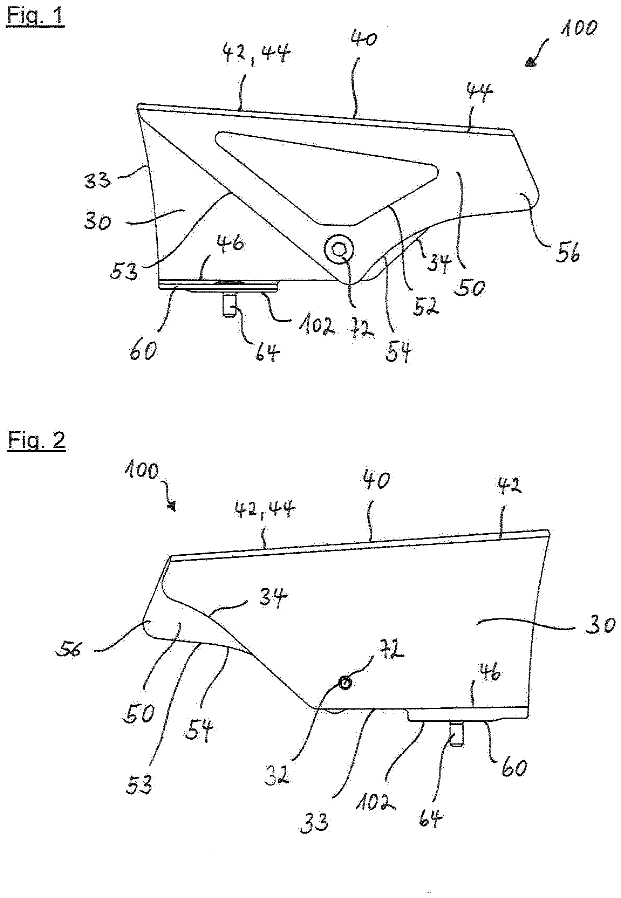

Figur 1 zeigt ein Fahrradanbauteil 100. Das Fahrradanbauteil 100 weist einen innenliegenden Bauteilbereich 30, einen obenliegenden Bauteilbereich 40 und einen außenliegenden Bauteilbereich 50 auf. Befindet sich ein freiliegender Abschnitt eines in den Figuren 1 bis 4 nicht gezeigten Zugmitteltriebs in dem von den Bauteilbereichen 30, 40, 50 umschlossenen Raum, wird der freiliegende Abschnitt des Zugmitteltriebs von diesen Bauteilbereichen 30, 40, 50 dreiseitig umgeben.

Der obenliegende Bauteilbereich 40 ist über eine linke obere Kante 42 mit dem innenliegenden Bauteilbereich 30 verbunden. Der obenliegende Bauteilbereich 40 ist zudem über eine rechte obere Kante 44 mit dem außenliegenden Bauteilbereich 50 verbunden. Mindestens eine der beiden Kanten 42, 44 kann, wie in der in den Figuren 1 bis 4 gezeigten Ausführungsform ausgebildet, abgerundet sein. In Figur 1 ist die Abrundung der rechten oberen Kante 44 und in Figur 2 die Abrundung der linken oberen Kante 42 gezeigt.

Der innenliegende Bauteilbereich 30 kann eine flossenartige Außenkontur 33 aufweisen. In einem vorderen Bereich des außenliegenden Bauteilbereichs 50 ist ein auskragender Abschnitt 56 angeordnet, welcher dem außenliegenden Bauteilbereich 50 diese Flossenform verleihen kann. In dem außenliegenden Bauteilbereich 50 kann zudem eine optionale Sichtausnehmung 52 angeordnet sein, welche eine dreieckige Kontur mit abgeflachten und/oder abgerundeten Ecken aufweisen kann. Die Kontur der Sichtausnehmung 52 kann zumindest abschnittsweise parallel zur Außenkontur 53 des außenliegenden Bauteilbereichs 50 verlaufen.

Der innenliegende Bauteilbereich 30 kann im Vergleich zum außenliegenden Bauteilbereich 50 verschieden ausgebildet sein. Dabei kann sich eine Außenkontur 33 des innenliegenden Bauteilbereichs 30 von der Außenkontur 53 des außenliegenden Bauteilbereichs 50 unterscheiden. Der innenliegende Bauteilbereich 30 wird zur Figur 2 näher beschrieben.

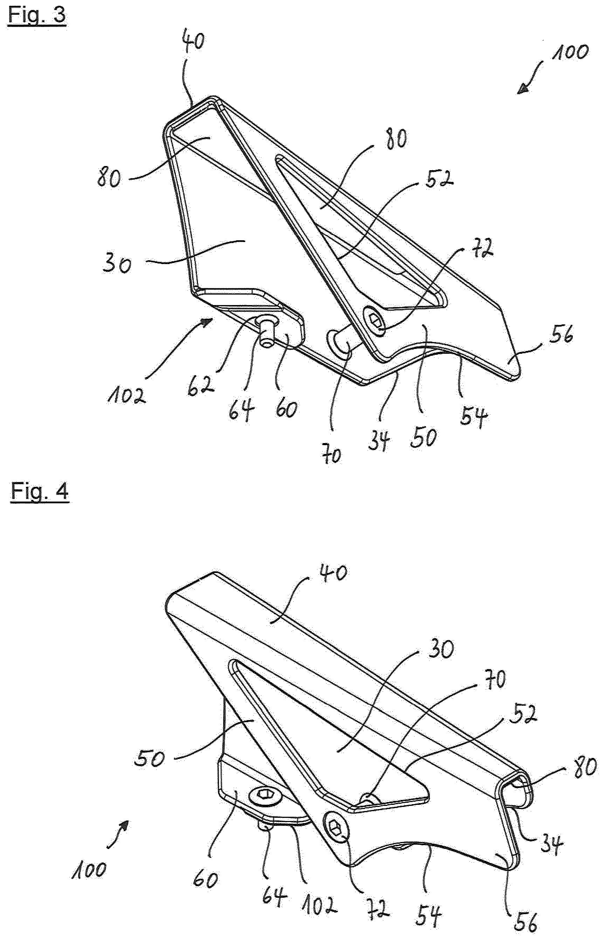

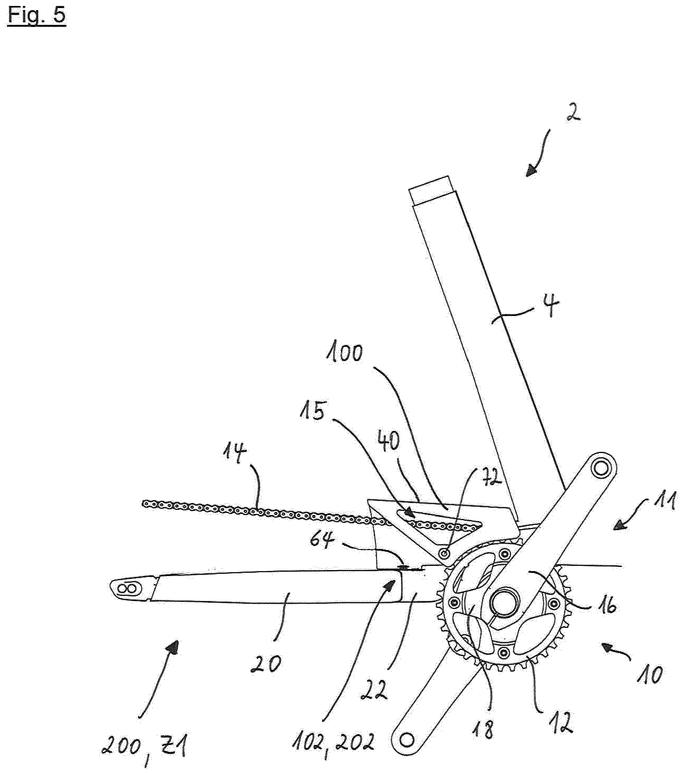

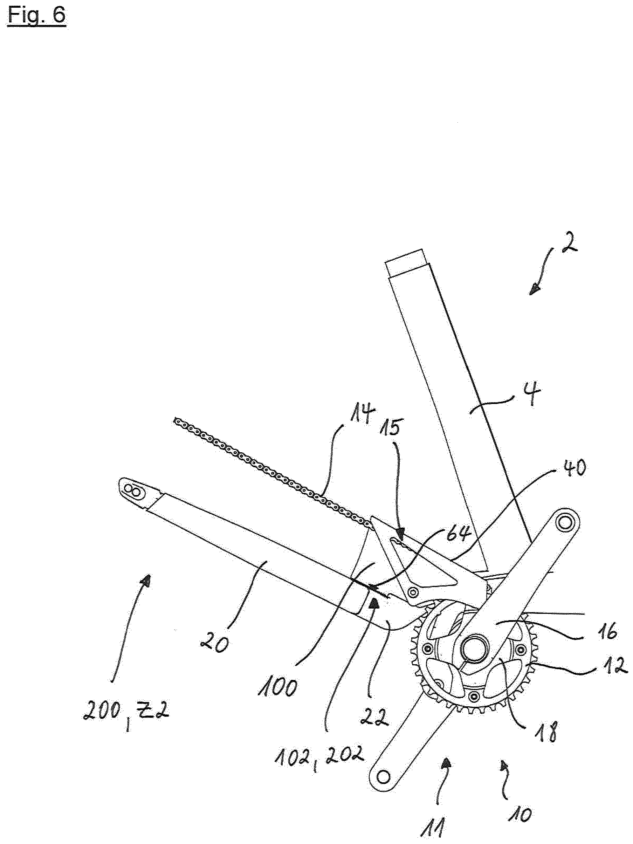

An einem unteren Bereich beziehungsweise an einer unteren Kante des innenliegenden Bauteilbereichs 30 ist ein Befestigungsbereich 60 angeordnet, welcher einen untenliegenden Außenkonturbereich 102 aufweist. Der Befestigungsbereich 60 ist über eine linke untere Kante 46 mit dem innenliegenden Bauteilbereich 30 verbunden. Die linke untere Kante 46 kann abgerundet oder abgeflacht sein. Der Befestigungsbereich 60 weist eine in Figur 3 gezeigte Befestigungsausnehmung 62 auf, in welcher ein Befestigungsmittel 64 zum Befestigen des Fahrradanbauteils 100 an der in den Figuren 5 und 6 gezeigten antriebsseitigen Kettenstrebe 20 hindurchragt. Das Befestigungsmittel 64 kann eine Schraube, beispielsweise eine Innensechskantschraube, sein.

Der innenliegende Bauteilbereich 30 kann mit dem außenliegenden Bauteilbereich 50 zudem mit einem in den Figuren 3 und 4 gezeigten Abstandshalter 70 und/oder einem Haltemittel 72 ausgesteift sein. Der außenliegende Bauteilbereich 50 kann mit dem Haltemittel 72, beispielsweise einer Innensechskantschraube, mit dem innenliegenden Bauteilbereich 30 verschraubt sein, wobei der innenliegende Bauteilbereich 30 eine in Figur 2 gezeigte Ausnehmung 32 mit Innengewinde aufweisen kann.

Figur 2 zeigt das Fahrradanbauteil 100 mit Blick auf den innenliegenden Bauteilbereich 30. Dieser kann flossenartig ausgebildet sein. Der außenliegende Bauteilbereich 50 und/oder der innenliegende Bauteilbereich 30 können sich wie in den Figuren 1 und 2 gezeigt jeweils nach unten verjüngen. Auch der innenliegende Bauteilbereich 30 kann in einem vorderen Bereich desselben einen auskragenden Abschnitt aufweisen. Die Ausnehmung 32 in dem innenliegenden Bauteilbereich 30 kann durch das Haltemittel 72 verschlossen sein, wodurch der innenliegende Bauteilbereich 30 auch mit der Ausnehmung 32 eine geschlossene Fläche ausbilden kann.

Das Haltemittel 72 kann bündig zu dem innenliegenden Bauteilbereich 30 in der Ausnehmung 32 angeordnet sein. Das Haltemittel 72 kann auch durch die Ausnehmung 32 hindurchragen und nach innen aus dem innenliegenden Bauteilbereich 30 hervorstehen. Ist dies der Fall, kann das Haltemittel 72 in die Kettenstrebe 20 beziehungsweise in die in den Figuren 5 und 6 gezeigten Schwinge 22 eingreifen und mit der antriebsseitigen Kettenstrebe 20 beziehungsweise der Schwinge 22 verschraubt sein. Das Fahrradanbauteil 100 kann so mit dem Befestigungsmittel 64 und mit dem Haltemittel 72 an der antriebsseitigen Kettenstrebe 20 beziehungsweise an der Schwinge 22 befestigt sein.

Der außenliegende Bauteilbereich 50 weist einen außenliegenden Außenkonturabschnitt 54 auf, welcher einem in den Figuren 5 und 6 gezeigtem Kurbelarm 16 einen zu dessen Bewegung notwendigen Freiraum bereithält, wenn das Fahrradanbauteil 100 an der antriebsseitigen Kettenstrebe 20 befestigt ist. Der innenliegende Bauteilbereich 30 weist einen innenliegenden Außenkonturabschnitt 34 auf, welcher einem in den Figuren 5 und 6 gezeigtem Kurbelstern 18 in vergleichbarer Weise einen Freiraum bereithält, wenn das Anbauteil 100 an der antriebsseitigen Kettenstrebe 20 befestigt ist. Das Fahrradanbauteil 100 behindert somit nicht eine drehende Bewegung der in den Figuren 5 und 6 gezeigten Kurbelgarnitur 11 des Fahrradantriebs 10.

In den Figuren 3 und 4 ist das Fahrradanbauteil 100 in perspektivischen Ansichten von schräg unten und schräg oben und mit Blickrichtung auf den außenliegenden Bauteilbereich 50 gezeigt. Auf einer nach unten gerichteten Fläche des oberen Bauteilbereichs 40 ist eine Einlage 80 angebracht, welche eine Gleitfläche beziehungsweise eine Schlagfläche für einen Zugmitteltrieb des Fahrradantriebs bereitstellt. Die Einlage 80 kann sich bis ans vordere Ende des oberen Bauteilbereichs 40 erstrecken, wie in Figur 4 gezeigt, oder sich nur bereichsweise über den oberen Bauteilbereich erstrecken, wie in Figur 3 gezeigt. Zudem kann an dem innenliegenden Bauteilbereich 30 ein Abstandshalter 70 angeordnet sein, in welchen das Haltemittel 72 eingreift. Handelt es sich bei dem Haltemittel 72 um eine Schraube, kann der außenliegende Bauteilbereich 50 mit dem innenliegenden Bauteilbereich 30 über den Abstandshalter 70 verschraubt sein. Zudem kann so ein definierter Abstand zwischen dem innenliegenden Bauteilbereich 30 und dem außenliegenden Bauteilbereich 50 definiert sein und das Fahrradanbauteil 100 ausgesteift sein.

Der in den Figuren 1 bis 4 nicht gezeigte Zugmitteltrieb, welcher in den Figuren 5 und 6 in einer Ausführungsform als Fahrradkette 14 ausgebildet ist, kann zwischen dem innenliegenden Bauteilbereich 30, dem obenliegenden Bauteilbereich 40 und dem außenliegenden Bauteilbereich 50 verlaufen, wodurch ein freiliegender Abschnitt des Zugmitteltriebs von diesen Bauteilbereichen 30, 40, 50 dreiseitig beabstandet umgeben ist. Der Zugmitteltrieb kann zudem von dem Befestigungsbereich 60 an einer vierten Seite umgeben sein. Auch der Abstandshalter 70 kann den Zugmitteltrieb an der vierten Seite umgeben.

Wie in Figur 4 auch gezeigt, kann sich der obenliegende Bauteilbereich 40 nach vorne verjüngen. Somit ist das Fahrradanbauteil 100 nach vorne trichterförmig ausgebildet. Zudem kann der Abstandshalter 70 eine geringere Breite als der oberhalb des Abstandshalters 70 liegende Abschnitt des obenliegenden Bauteilbereichs 40 aufweisen, wodurch das Fahrradanbauteil 100 zudem trichterförmig nach unten verläuft. Mit anderen Worten verringert sich dann ein Abstand zwischen dem außenliegenden Bauteilbereich 50 und dem innenliegenden Bauteilbereich 30 von oben nach unten.

Wie in den Figuren 3 und 4 auch gezeigt, weist der Befestigungsbereich 60 einen Außenkonturbereich 102 auf, welcher abgestuft sein kann. Eine derartige Abstufung des Befestigungsbereichs 60 kann eine passgenaue Montage des Fahrradanbauteils 100 auf einem Anbaubereich 202 der antriebsseitigen Kettenstrebe 20, wie in den Figuren 5 und 6 gezeigt, bereithalten. In Figur 5 ist das Fahrradanbauteil 100 der Figuren 1 bis 4 in einem Befestigungszustand an einer antriebsseitigen Kettenstrebe 20 eines Fahrradhinterbaus 200 gezeigt. Die antriebsseitige Kettenstrebe 20 weist eine Schwinge 22 auf, an welcher das Fahrradanbauteil 100 mit dem Befestigungsmittel 64 befestigt sein kann. Alternativ oder zusätzlich kann das Fahrradanbauteil 100, wie zu den vorhergehenden Figuren beschrieben, mit dem Haltemittel 72 an der Schwinge 22 der antriebsseitigen Kettenstrebe 20 befestigt sein. Die sich gegenüberliegenden Bereiche, der Außenkonturbereich 102 des Fahrradanbauteils 100 und der Anbaubereich 202 des Fahrradhinterbaus 200, können einen Passsitz ausbilden.

In Figur 5 ist der Fahrradhinterbau 200 in einem ausgefederten Zustand Z1 gezeigt. Zwischen dem freiliegenden Abschnitt 15 der in den Figuren 5 und 6 gezeigten Fahrradkette 14 und dem diesen umgebenden Fahrradanbauteil 100 ist zu dessen obenliegenden Bauteilbereich 40 ein Abstand ausgebildet. Zudem weist das in den Figuren 5 und 6 gezeigte Fahrradanbauteil 100 in seinem Befestigungszustand einen Abstand zum Kurbelarm 16 und zum Kurbelstern 18 der Kurbelgarnitur 11 auf, sodass sich diese frei bewegen kann. Zähne des Kettenblatts 12 können zumindest abschnittsweise von dem Fahrradanbauteil 100 umgeben sein.

In Figur 6 ist der Fahrradhinterbau 200 in einem eingefederten Zustand Z2 gezeigt. Der von der antriebsseitigen Kettenstrebe 20 und einem Sitzrohr 4 des Fahrradrahmens 2 eingeschlossenen Winkel ist in diesem eingefederten Zustand Z2 kleiner als der entsprechende Winkel in dem in Figur 5 gezeigten ausgefederten Zustand Z1. Zwischen den beiden Zuständen Z1, Z2 kann die antriebsseitige Kettenstrebe 20 grundsätzlich in jedem beliebigen Winkel in einem Fahrbetrieb des Fahrrads angeordnet sein. Hierfür ist die antriebsseitige Kettenstrebe 20 über deren Schwinge 22 an dem Fahrradrahmen 2 federnd angelenkt. Eine Federung des Fahrradhinterbaus 200 an dem Fahrradrahmen 2 ist in den Figuren wie auch eine weitere die antriebsseitige Kettenstrebe 20 an deren Ausfallende mit dem Sitzrohr 4 des Fahrradrahmens 2 verbindenden Strebe, insbesondere eine Sitzstrebe, nicht gezeigt.

In dem in Figur 6 gezeigten eingefederten Zustand Z2 der antriebsseitigen Kettenstrebe 20 verringert sich der Abstand zwischen dem freiliegenden Abschnitt 15 der Fahrradkette 14 und dem obenliegenden Bauteilbereich 40 des Fahrradanbauteils 100 im Vergleich zum ausgefederten Zustand Z1. Jedoch berührt das Fahrradanbauteil 100 beziehungsweise dessen obenliegender Bauteilbereich 40 auch in dem eingefederten Zustand Z2 nicht die Fahrradkette 14. Wie zudem in Figur 2 gezeigt, schwenkt das Fahrradanbauteil 100 in dem eingefederten Zustand Z2 relativ zum Fahrradrahmen 2 und zur Kurbelgarnitur 11 zusammen mit der antriebsseitigen Kettenstrebe 20 nach vorne ein. Das Fahrradanbauteil 100 umgibt dabei weiterhin einen Bereich des Kettenblatts 12, welcher größer als der entsprechende Bereich im ausgefederten Zustand Z1 ist.

### Bezugszeichen

- 2: Fahrradrahmen
- 4: Sitzrohr
- 10: Fahrradantrieb
- 11: Kurbelgarnitur
- 12: Kettenblatt
- 14: Fahrradkette
- 15: freiliegender Abschnitt
- 16: Kurbelarm
- 18: Kurbelstern
- 20: antriebsseitige Strebe
- 22: Schwinge
- 30: innenliegender Bauteilbereich
- 32: Ausnehmung
- 33: Außenkontur
- 34: innenliegender Außenkonturabschnitt
- 40: obenliegender Bauteilbereich
- 42: linke obere Kante
- 44: rechte obere Kante
- 46: linke untere Kante
- 50: außenliegender Bauteilbereich
- 52: Sichtausnehmung
- 53: Außenkontur
- 54: außenliegender Außenkonturabschnitt
- 56: auskragender Abschnitt
- 60: Befestigungsbereich
- 62: Befestigungsausnehmung
- 64: Befestigungsmittel
- 70: Abstandshalter
- 80: Einlage
- 100: Fahrradanbauteil
- 102: Außenkonturbereich
- 200: Fahrradhinterbau
- 202: Anbaubereich
- Z1: ausgefederter Zustand
- Z2: eingefederter Zustand

## Patentansprüche

1. Fahrradanbauteil (100) zum Abschirmen von einem zwischen zwei Zahnrädern eines Fahrradantriebs (10) freiliegenden Abschnitt (15) eines Zugmitteltriebs des Fahrradantriebs (10), insbesondere einer Fahrradkette (14),
wobei das Fahrradanbauteil (100) zum Befestigen an einer antriebsseitigen Strebe, insbesondere einer Kettenstrebe (20), eines Fahrradhinterbaus (200) ausgebildet ist, und
wobei das Fahrradanbauteil (100) in dem Befestigungszustand an der antriebsseitigen Strebe den freiliegenden Abschnitt (15) des Zugmitteltriebs dreiseitig umgibt,
wobei das Fahrradanbauteil (100) einen innenliegenden Bauteilbereich (30) zum Abschirmen des freiliegenden Abschnitts (15) des Zugmitteltriebs von einem an dem Fahrradhinterbau (200) angeordneten Hinterradreifen aufweist, und
wobei das Fahrradanbauteil (100) einen obenliegenden Bauteilbereich (40) und einen außenliegenden Bauteilbereich (50) zum jeweiligen Abschirmen des freiliegenden Abschnitts (15) des Zugmitteltriebs aufweist,
**dadurch gekennzeichnet, dass**
sich der obenliegende Bauteilbereich (40) zu einem vorderen Zahnrad der beiden Zahnräder, insbesondere einem Kettenblatt (12), des Fahrradantriebs (10) zumindest abschnittsweise verjüngt.

2. Fahrradanbauteil (100) nach Anspruch 1,
wobei das Fahrradanbauteil (100) einen untenliegenden Befestigungsbereich (60) zum Befestigen des Fahrradanbauteils (100) an der antriebsseitigen Strebe aufweist, und
wobei der untenliegende Befestigungsbereich (60) eine Befestigungsausnehmung (62) für ein Befestigungsmittel (64) aufweist.

3. Fahrradanbauteil (100) nach einem der vorhergehenden Ansprüche,
wobei das Fahrradanbauteil (100) einstückig ausgebildet ist.

4. Fahrradanbauteil (100) nach einem der vorhergehenden Ansprüche,
wobei der innenliegende Bauteilbereich (30) plattenförmig und als geschlossene Fläche ausgebildet ist.

5. Fahrradanbauteil (100) nach einem der vorhergehenden Ansprüche,
wobei der außenliegende Bauteilbereich (50) plattenförmig ausgebildet ist und eine Sichtausnehmung (52) aufweist.

6. Fahrradanbauteil (100) nach einem der vorhergehenden Ansprüche,
wobei der außenliegende Bauteilbereich (50) einen konkaven Außenkonturabschnitt (54) zum Bereitstellen von einem Freiraum für einen sich bewegenden Kurbelarm (16) des Fahrradantriebs (10) aufweist.

7. Fahrradanbauteil (100) nach einem der vorhergehenden Ansprüche,
wobei der innenliegende Bauteilbereich (30) einen konkaven Außenkonturabschnitt (34) zum Bereitstellen von einem Freiraum für einen sich bewegenden Kurbelstern (18) des Fahrradantriebs (10) aufweist.

8. Fahrradanbauteil (100) nach Anspruch 6 und 7,
wobei der konkave Außenkonturabschnitt (54) des außenliegenden Bauteilbereichs (50) und der konkave Außenkonturabschnitt (34) des innenliegenden Bauteilbereichs (30) verschieden ausgeformt sind.

9. Fahrradanbauteil (100) nach einem der vorhergehenden Ansprüche,
wobei sich der innenliegende Bauteilbereich (30) und der außenliegende Bauteilbereich (50) zumindest abschnittsweise nach unten verjüngen.

10. Fahrradanbauteil (100) nach einem der vorhergehenden Ansprüche,
wobei das Fahrradanbauteil (100) einen Abstandshalter (70) zwischen dem innenliegenden Bauteilbereich (30) und dem außenliegenden Bauteilbereich (50) zum Aussteifen des Fahrradanbauteils (100) aufweist.

11. Fahrradanbauteil (100) nach Anspruch 10,
wobei der Abstandshalter (70) in dem Befestigungszustand in die antriebsseitige Strebe eingreift.

12. Fahrradanbauteil (100) nach einem der vorhergehenden Ansprüche,
wobei an dem Fahrradanbauteil (100) eine dem Zugmitteltrieb zugewandte Einlage (80) zum Bereitstellen einer Gleitfläche für den Zugmitteltrieb oder zum Bereitstellen eines Schlagschutzes für den Zugmitteltrieb angeordnet ist.

13. Fahrradanbauteil (100) nach einem der vorhergehenden Ansprüche,
wobei das Fahrradanbauteil (100) einen zu einem vorderen Zahnrad der beiden Zahnräder, insbesondere einem Kettenblatt (12), auskragenden Abschnitt (56) zum Bereitstellen eines Kettenabspringschutzes aufweist.

14. Fahrradhinterbau (200),
welcher an einer antriebsseitigen Strebe einen Anbaubereich (202) zum Befestigen des Fahrradanbauteils (100) nach einem der vorhergehenden Ansprüche aufweist.

15. Fahrrad, mit
einem an einem Fahrradrahmen (2) gefedert angelenkten Fahrradhinterbau (200), welcher eine antriebsseitige Strebe, insbesondere eine Kettenstrebe (20), aufweist,
wobei an der antriebsseitigen Strebe ein Fahrradanbauteil (100) nach einem der Ansprüche 1 bis 13 befestigt ist, und
wobei das Fahrradanbauteil (100) derart an der antriebsseitigen Strebe befestigt und dimensioniert ist, dass der freiliegende Abschnitt (15) des Zugmitteltriebs in einem ausgefederten Zustand (Z1) des Fahrradhinterbaus (200) und in einem eingefederten Zustand (Z2) des Fahrradhinterbaus (200) von dem Fahrradanbauteil (100) dreiseitig umgeben ist.

## Claims

1. A bicycle attachment part (100) for shielding an exposed section (15) of a traction transmission of a bicycle drive (10), in particular a bicycle chain (14), wherein the exposed section (15) is exposed between two gear wheels of the bicycle drive (10),
wherein the bicycle attachment part (100) is configured to be mounted on a drive sided strut, in particular a chain strut (20), of a bicycle rear frame (200), and
wherein the bicycle attachment part (100), in the state of mounting on the drive sided strut, surrounds the exposed section (15) of the traction transmission on three sides,
wherein the bicycle attachment part (100) comprises an inner part region (30) for shielding the exposed section (15) of the traction transmission from a rear wheel tyre, which is arranged on the bicycle rear frame (200), and
wherein the bicycle attachment part (100) comprises an upper part region (40) and an outer part region (50) for respectively shielding the exposed section (15) of the traction transmission,
**characterised in that**
the upper part region (40) tapers at least in sections towards a front gear wheel of the two gear wheels, in particular a chain ring (12), of the bicycle drive (10).

2. The bicycle attachment part (100) according to claim 1,
wherein the bicycle attachment part (100) comprises a lower mounting area (60) for mounting the bicycle attachment part (100) on the drive sided strut, and
wherein the lower mounting area (60) comprises a mounting recess (62) for a mounting means (64).

3. The bicycle attachment part (100) according to any one of the preceding claims,
wherein the bicycle attachment part (100) is formed integrally.

4. The bicycle attachment part (100) according to any one of the preceding claims,
wherein the inner part region (30) is configured plate-shaped and as a closed surface.

5. The bicycle attachment part (100) according to any one of the preceding claims,
wherein the outer part region (50) is configured plate-shaped and comprises a viewing recess (52).

6. The bicycle attachment part (100) according to any one of the preceding claims,
wherein the outer part region (50) comprises a concave outer contour section (54) for providing a clearance for a moving crank arm (16) of the bicycle drive (10).

7. The bicycle attachment part (100) according to any one of the preceding claims,
wherein the inner part region (30) comprises a concave outer contour section (34) for providing a clearance for a moving crank spider (18) of the bicycle drive (10).

8. The bicycle attachment part (100) according to claims 6 and 7,
wherein the concave outer contour section (54) of the outer part region (50) and the concave outer contour section (34) of the inner part region (30) are shaped differently.

9. The bicycle attachment part (100) according to any one of the preceding claims,
wherein the inner part region (30) and the outer part region (50) taper downwards at least in sections.

10. The bicycle attachment part (100) according to any one of the preceding claims,
wherein the bicycle attachment part (100) comprises a spacer (70) between the inner part region (30) and the outer part region (50) for stiffening the bicycle attachment part (100).

11. The bicycle attachment part (100) according to claim 10,
wherein the spacer (70) engages in the drive sided strut in the state of mounting.

12. The bicycle attachment part (100) according to any one of the preceding claims,
wherein an insert (80) for providing a sliding surface for the traction transmission or for providing an impact protection for the traction transmission is arranged on the bicycle attachment part (100), wherein the insert (80) faces the traction transmission.

13. The bicycle attachment part (100) according to any one of the preceding claims,
wherein the bicycle attachment part (100) comprises a section (56) for providing a chain jumping off protection, wherein the section (56) projects towards a front gear wheel of the two gear wheels, in particular a chain ring (12).

14. Bicycle rear frame (200),
which comprises, on a drive sided strut, an attachment region (202) for mounting the bicycle attachment part (100) according to any one of the preceding claims.

15. Bicycle, with
a bicycle rear frame (200) which is articulated in a spring-mounted manner to a bicycle frame (2) and which comprises a drive sided strut, in particular a chain strut (20),
wherein a bicycle attachment part (100) according to any one of claims 1 to 13 is mounted on the drive sided strut, and
wherein the bicycle attachment part (100) is mounted to the drive sided strut and is dimensioned in such a way that the exposed section (15) of the traction transmission is surrounded on three sides by the bicycle attachment part (100) in an undeflected state (Z1) of the bicycle rear frame (200) and in a deflected state (Z2) of the bicycle rear frame (200).

## Revendications

1. Pièce rapportée de bicyclette (100) destinée à protéger une section (15) exposée entre deux roues dentées d'une transmission de bicyclette (10), d'un moyen de traction de la transmission de bicyclette (10), en particulier d'une chaîne de bicyclette (14),
la pièce rapportée de bicyclette (100) étant conçue pour être fixée à une entretoise côté entraînement, en particulier une entretoise de chaîne (20), d'un cadre arrière de bicyclette (200), et
la pièce rapportée de bicyclette (100), dans l'état de fixation à l'entretoise côté entraînement, entourant sur trois côtés la section (15) exposée du moyen de traction de la transmission,
la pièce rapportée de bicyclette (100) comprenant une zone de la pièce intérieure (30) pour protéger la section (15) exposée du moyen de traction de la transmission d'un pneu de roue arrière disposé sur le cadre arrière de bicyclette (200), et
la pièce rapportée de bicyclette (100) comprenant une zone de la pièce supérieure (40) et une zone de la pièce extérieure (50) pour protéger respectivement la section (15) exposée du moyen de traction de la transmission,
**caractérisé en ce que**
la zone de la pièce supérieure (40) se rétrécit au moins par sections vers une roue dentée avant des deux roues dentées, en particulier un plateau (12), de la transmission de bicyclette (10).

2. Pièce rapportée de bicyclette (100) selon la revendication 1,
la pièce rapportée de bicyclette (100) comprenant une zone de fixation inférieure (60) pour fixer la pièce rapportée de bicyclette (100) à l'entretoise côté entraînement, et
la zone de fixation inférieure (60) comprenant un évidement de fixation (62) pour un moyen de fixation (64).

3. Pièce rapportée de bicyclette (100) selon l'une quelconque des revendications précédentes,
la pièce rapportée de bicyclette (100) étant formé d'une seule pièce.

4. Pièce rapportée de bicyclette (100) selon l'une quelconque des revendications précédentes,
la zone de la pièce intérieure (30) étant conçue en forme de plaque et d'une surface fermée.

5. Pièce rapportée de bicyclette (100) selon l'une quelconque des revendications précédentes,
la zone de la pièce extérieure (50) étant conçue en forme de plaque et comprenant un évidement de visibilité (52).

6. Pièce rapportée de bicyclette (100) selon l'une quelconque des revendications précédentes,
la zone de la pièce extérieure (50) comprenant une section de contour extérieur concave (54) pour fournir un espace libre pour un bras de manivelle (16) de la transmission de bicyclette (10).

7. Pièce rapportée de bicyclette (100) selon l'une quelconque des revendications précédentes,
la zone de la pièce intérieure (30) comprenant une section de contour extérieur concave (34) pour fournir un espace libre pour une étoile de manivelle (18) de la transmission de bicyclette (10).

8. Pièce rapportée de bicyclette (100) selon les revendications 6 et 7,
la section de contour extérieur concave (54) de la zone de la pièce extérieure (50) et la section de contour extérieur concave (34) de la zone de la pièce intérieure (30) sont formées différemment.

9. Pièce rapportée de bicyclette (100) selon l'une quelconque des revendications précédentes,
la zone de la pièce intérieure (30) et la zone de la pièce extérieure (50) se rétrécissent vers le bas au moins par sections.

10. Pièce rapportée de bicyclette (100) selon l'une quelconque des revendications précédentes,
la pièce rapportée de bicyclette (100) comprenant une espaceurs (70) entre la zone de la pièce intérieure (30) et la zone de la pièce extérieure (50) pour rigidifier la pièce rapportée de bicyclette (100).

11. Pièce rapportée de bicyclette (100) selon la revendication 10,
l'espaceurs (70), dans l'état de fixation, s'engage dans l'entretoise côté entraînement.

12. Pièce rapportée de bicyclette (100) selon l'une quelconque des revendications précédentes,
un entoilage (80) tournée vers le moyen de traction de la transmission étant disposée sur la pièce rapportée de bicyclette (100) pour fournir une surface de glissement pour le moyen de traction de la transmission ou pour fournir une protection contre les chocs pour le moyen de traction de la transmission.

13. Pièce rapportée de bicyclette (100) selon l'une quelconque des revendications précédentes,
la pièce rapportée de bicyclette (100) comprenant une section (56) en saillie vers une roue dentée avant des deux roues dentées, en particulier un plateau (12), pour fournir une protection contre les sauts de chaîne.

14. Cadre arrière de bicyclette (200),
qui comprend, sur une entretoise côté entraînement, une zone de montage (202) pour la fixation de la pièce rapportée de bicyclette (100) selon l'une quelconque des revendications précédentes.

15. Bicyclette, comprenant
un cadre arrière de bicyclette (200) articulée par ressort sur un cadre de bicyclette (2), qui comprend une entretoise côté entraînement, en particulier une entretoise de chaîne (20),
une pièce rapportée de bicyclette (100) selon l'une quelconque des revendications 1 à 13 étant fixé à l'entretoise côté entraînement, et
la pièce rapportée de bicyclette (100) étant fixée à l'entretoise côté entraînement de telle sorte et dimensionnée que la section (15) exposée du moyen de traction de la transmission est entourée sur trois côtés par la pièce rapportée de bicyclette (100) dans un état déployé (Z1) du cadre arrière de bicyclette (200) et dans un état rétracté (Z2) du cadre arrière de bicyclette (200).
